# EUROPEAN PATENT APPLICATION

(11) **EP 1 452 094 A2**
(43) Date of publication of application: **01.09.2004**
(21) Application number: 04380042.4
(22) Date of filing: 25.02.2004
(51) Int. Cl.: A21B 1/33, A21B 1/48

(54) **Baking oven for pastry products**

(30) Priority: 25.02.2003 ES 200300453
(71) Applicant: Tecmesur Tecnologia Mecanica Del Sur, S.L., 41564 Lora de Estepa (Sevilla) (ES)
(72) Inventor: Luque Perez, Gabriel, 41564 Lora de Estepa (ES)
(74) Representative: Davila Baz, Angel

(57) **Abstract**

A baking oven for pastry products comprising a tunnel composed of modular sections (1) along which runs a conveyor chain or belt (6), above and below which gas burners grouped by area, provided with independent regulating means, are arranged, these burners being constituted by tubular bodies (7) perpendicularly laying across the tunnel and having holes along thereof. These tubular bodies are connected through mixers to a gas supply circuit (12) and an air supply circuit (24). A deflector (10) is arranged near each burner (7).

## Description

The present invention relates to a baking oven for pastry products, with continuous operation, provided with gas burners which can be fed with propane gas or natural gas and which are installed in differentiated areas, with independent regulation in each area.

More particularly, the oven of the invention is of the type comprising a modular tunnel of rectangular cross-section along which runs a conveyor chain or belt for the products to be baked and inside of which the gas burners are arranged for baking the products carried by the conveyor chain or belt, the tunnel having openings on the ceiling for exhausting combustion and baking products and openings for the entry of air on the floor.

An oven of the type set forth is disclosed in Spanish patent N° 320,836, relative to a continuous, propane-fed tunnel oven for baking. The tunnel of this oven is of rectangular cross-section and is made of sheet metal, having a fiberglass-based inner insulating lining. Along the tunnel runs a conveyor chain having an actuating means of adjustable speed. Also mounted inside the oven, below the leading section of the belt, is a burner composed of a tube of rectangular cross-section, which runs along the tunnel and has exit holes for the combustible mixture in the top wall, the diameter and spacing of these holes being such that they allow a temperature variation along the tunnel, increasing from the entrance to the exit. A temperature distributor is arranged between the burner and the leading section of the belt, and below it, there is an air inlet for regulating the temperature. The oven is completed by a control panel, a temperature control automatic system, a thermostat controlling the gas feed according to the temperature, an on-pilot light, safety elements, a stack with an exhauster, etc. In addition, the oven is dismantleable by sections or modules so that it can be extended for big production runs and its transportation is facilitated. With the arrangement set forth it is neither easy to achieve an adequate temperature regulation inside the oven nor to achieve a high output.

From Spanish patent ES 2147070 a baking oven having a similar constitution is known, in which the oven also comprises a tunnel composed of modular sections of rectangular cross-section, along which runs a conveyor chain or belt. The oven also houses burners and has control means similar to those disclosed above. In order to prevent that the products to be baked come into contact with combustion gases, the invention provides for the leading section of the conveyor chain or belt to run on the inside of the baking chamber formed along the tunnel. The burners are constituted by two tubular coils, one running above and the other one below the baking chamber, and have outlet holes for the combustible mixture. Independent stacks, which open into general evacuation stacks, exit from the combustion chamber and the baking chamber. The arrangement set forth requires arranging the covering that defines the baking chamber inside the tunnel, independent from the combustion chamber, and whereupon requires independent stacks for both chambers. On the other hand, the burners in the form of tubular coils do not allow a perfect control over combustion either, and furthermore its assembly and disassembly, each time cleaning or repairs are required to be carried out, are painstaking and complicated tasks which require turning off the oven.

The object of the present invention is to prevent the problems set forth by means of a tunnel of the type disclosed, which allows strict control of the temperature, easy and fast assembly and disassembly of the burners, and achieving a high output.

As already indicated, the tunnel of the invention is of the type constituted by a modular casing of a metallic nature, of rectangular cross-section, having an internal lining of insulating material, along which tunnel the leading section of a conveyor chain or belt runs. The tunnel is provided with burners, stacks for the exit of combustible products, control elements, etc.

Within the tunnel of the invention, the combustion chamber and the baking chamber coexist, and the burners are made up of tubular bodies perpendicularly laying across the tunnel, above and below the leading section of the conveyor belt, and have along the burner a series of calibrated holes among which propagates the flame oriented towards one of the radiant deflectors. These bodies project through one of the walls of the tunnel, whereby they can be easily extracted for their replacement or repair. Along the oven, the burner array is divided in areas having independent regulating means, there being in each area top or ceiling burners and bottom or floor burners.

Each tubular body is connected through a mixer to a gas supply circuit and to an air supply circuit.

The gas supply circuit includes a general pipe that runs the entire oven, passing through all the burner areas. In each area of the oven, two branch pipes depart this general pipe, one for supplying the ceiling burners and the other one for supplying the floor burners. Each branch pipe is provided with a manual shut-off valve and a regulator. Thus, the different areas are independently adjustable, and within each area the top and bottom burners are also independently adjustable.

After the regulator, from each branch pipe depart as many inlets as burners are in the area, which arrive at the corresponding mixers, a manual shut-off valve and a safety solenoid valve are arranged in this order in each inlet.

Likewise, the air supply circuit comprises a general pipe that runs the entire oven, passing through all the burner areas, and is fed by compressed air from a blower. In each area, two branch pipes depart this general pipe, one for supplying the top or ceiling burners and the other one for supplying the bottom or floor burners. Each branch pipe has at the beginning thereof a servomotor which regulates the flow rate of air reaching the burners in each area according to the temperature thereof. From each branch pipe depart as many inlets as burners it has to feed, which arrive at the corresponding mixers. The air flow rate changes cause the quantity of gas that converges on the burners to change and thus the heat power applied by all the top and bottom burners of the area.

According to the other feature of the invention, inside the tunnel there is a radiant and orientable deflector mounted near each burner and parallel thereto, with which it is achieved that most of the heat reaching the product does so by radiation, with greater and cleaner utilization thereof.

As indicated above, the oven of the invention is of the type constituted by independent modules. Each module forming the tunnel will carry two burners, a top one and a bottom one, arranged in a position not facing each other vertically. An orientable deflector will be arranged near each burner.

The features set forth, as well as other ones belonging to the invention, and the advantages derived thereof, will be better understood with the following description, made with reference to the attached drawings, in which an non-limitative example of embodiment is shown.

In the drawings:
Figure 1 shows a partial perspective view of an oven constituted according to the invention, wherein two inlets, a ceiling one and a floor one, each with six modules and six burners, are shown.
Figure 2 shows a cross-sectional view of the oven of Figure 1.
Figure 3 shows a longitudinal sectional view of the oven of Figure 1.
Figure 4 shows a perspective view of the air and gas supply circuits.
Figure 5 shows a perspective view of the air and gas feed to the mixer of a burner, showing also the connection between the mixer and the burner.
Figures 6 and 7 respectively show a plan view and a cross-sectional view of the burners, according to a cut line VII-VII of Figure 6.
Figure 8 shows a schematic view of the accessory and safety ramp located in the common feed collector, as well as the air and gas feed of the oven areas and to the burners of said areas.

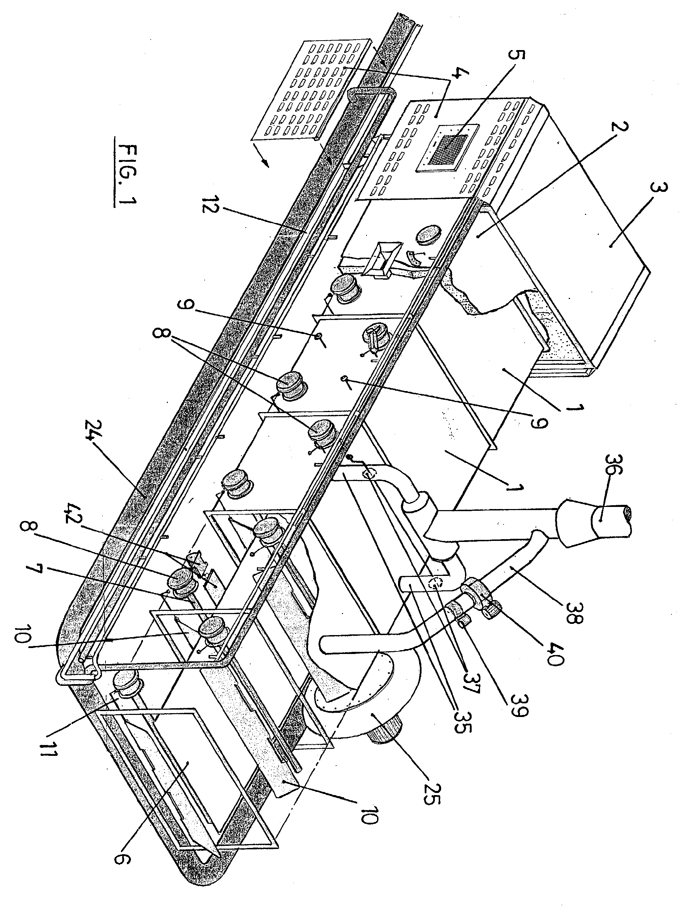

Figures 1, 2 and 3 show an oven section corresponding to two areas, a ceiling one and a floor one, each one with six modules and six burners, constituted according to the invention, which include a tunnel composed of a series of modules 1, composed of 4 mm-thick carbon steel, around which an insulation 2 is arranged, protected by the outer covering 3, the sides 4 of which can be dismantleable, one of them including a touch screen 5 for regulation and control. Along this tunnel runs the leading section of a conveyor belt or chain 6 on top of which the products to be baked will be arranged.

The tunnel formed by the modules 1 defines the combustion chamber in which the burners are installed, each one of which is constituted by a tubular body 7-7' which transversally lays across the tunnel and which ends in an outer head 8 located outside the tunnel. Each module 1 includes two burners; one of them located below the leading section of the belt 6 and the other one above it. Each area also includes two probes 9 for regulation thereof, located on the module itself, one below and the other one above the leading section 6 of the belt.

Burners 7 with the head 8 can be dismantled to carry out any repair or maintenance service even if the oven is in full operation, without affecting or influencing in any way the rest of the burners.

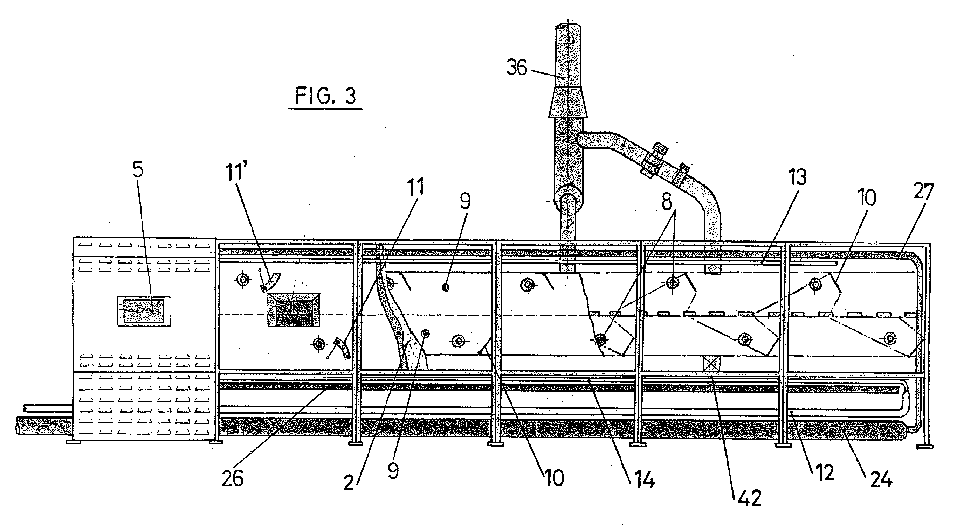

Near the body 7-7' of each burner, a radiant deflector 10 of heat-resisting steel is arranged in a position parallel thereto, which is mounted on a swing shaft 11 coincident or close to one of its longitudinal edges. As can be better appreciated in Figure 3, this shaft is connected to outer angular strips 11' by means of the actuation of which the deflectors 10 may be oriented with regard to the bodies 7-7' of the burners, such that the radiation of heat is directed towards the product which is being attempted to bake, thus achieving a greater oven output and a more uniform, emission-free baking. Furthermore, the flame area of the burners may be oriented in different positions by means of turning the body 7, which allows for them to be installed either below or above the leading section 6 of the belt and at the same time to obtain the best incidence angle with the radiant deflectors 10.

The oven output is also helped by the insulation 2, which further prevents heating of the outer covering 3.

The conveyor belt to which the leading section 6 belongs is carried out in a continuous manner by means of a speeder motor allowing for the adjustment of different drag speeds, so that different baking times are obtained for different products.

The burners of the oven of the invention are automatic, with forced-air, of modular operation, and are grouped in several differentiated areas, each one of them with independent regulation, as set forth next, and each area including bottom burners 7 and top burners 7'.

All the burners of the oven are fed through a gas supply circuit and an air supply circuit.

The gas supply circuit includes a general pipe 12 that runs the entire oven, passing through all the burner areas. In each area, two branch pipes 13 and 14 depart the general pipe 12, the first one for supplying the top or ceiling burners 7' and the second one for supplying the bottom or floor burners 7. Each branch pipe includes, in this order, a manual shut-off valve and a regulator, indicated as a whole by references 15-15', the regulator providing gas at zero pressure. As many inlets 16 as ceiling and floor burners are included in the area, depart each one of the branch pipes 13 and 14. A manual shut-off valve 17 and a safety solenoid valve 18, after which there is a mixer 19 for each of the mixers 7-7', are arranged in this order in each inlet 16.

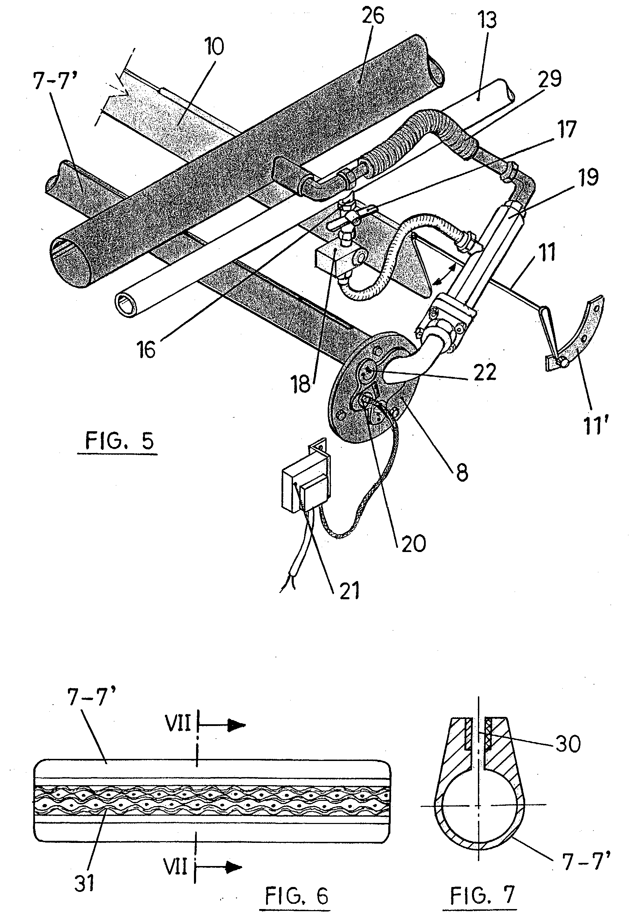

The head 8 of each burner comprises a base plate carrying an ignition electrode 20, feed trough an ignition transformer 21, as well as inspection ports 22, all of it as it can be appreciated in Figure 5.

Likewise, the air supply circuit includes a general pipe 24 that runs the oven, passing through all the burner areas, which is fed with compressed air through a blower 25, Figure 1. In each area, two general pipes 26 and 27, each provided with an automatic pressure regulator 28, as well as inlets 29 that come out on mixer 19 of the corresponding burner, depart this general pipe, Figure 5.

The combustion equipment in the oven of the invention is thus constituted by a set of forced-air automatic burners 8, which are grouped in areas, with independent regulation in each one of them.

The ignition, operation and automatic regulation in each area are controlled by a programmable automaton. Each burner has an ignition device 20, Figure 5, and a flame control involves an electrode that by means of an electric arc causes a flame to form during start-up, and controls its presence or absence by ionization.

The variations in heat power of the burners 8 grouped in each area occurs automatically depending on the variations of the regulation target parameter, which will be the temperature in the combustion chamber, without the need for service staff actuation.

As set forth, each burner has a mixer 19 with an air inlet in its head 8, the flow rate of which can be automatically regulated for all burners in the area by means of the regulator 28. Likewise, it has a gas inlet 16 through which gas at zero pressure is provided. In the gas inlet of the mixer there is a flow rate regulating device allowing for the introduction of a fine adjustment of the combustion in each burner.

As can be appreciated in Figures 6 and 7, the tubular body 7-7' of each burner has along thereof a series of calibrated holes 30 which are regularly distributed between corrugated metal sheets 31 which provide a perfectly-compensated flame retention effect with which a high-quality regular combustion and output are obtained with the minimum emission level.

The air supplied through the inlets 29 enters the mixer 19 of each burner acting as an inductor fluid, which by passing through a Venturi tube creates, by the effect of the throughflow speed, a depression within the mixer causing the draft of gas at zero pressure through inlet 16.

The air flow rate and thus the heat input of the burners in each area are modified according to the regulation target parameter, which is temperature. Via probes 9, the temperature variations in an area result in electric signals which are sent to the automaton 33 and from it to the servomotor 28 which suitably modifies the flow rate of combustion air for all burners of the area. Continuous operation of the burners, which modulate their heat power according to temperature variations, is thereby obtained. The burners included in the oven of the invention can run both with propane gas and natural gas.

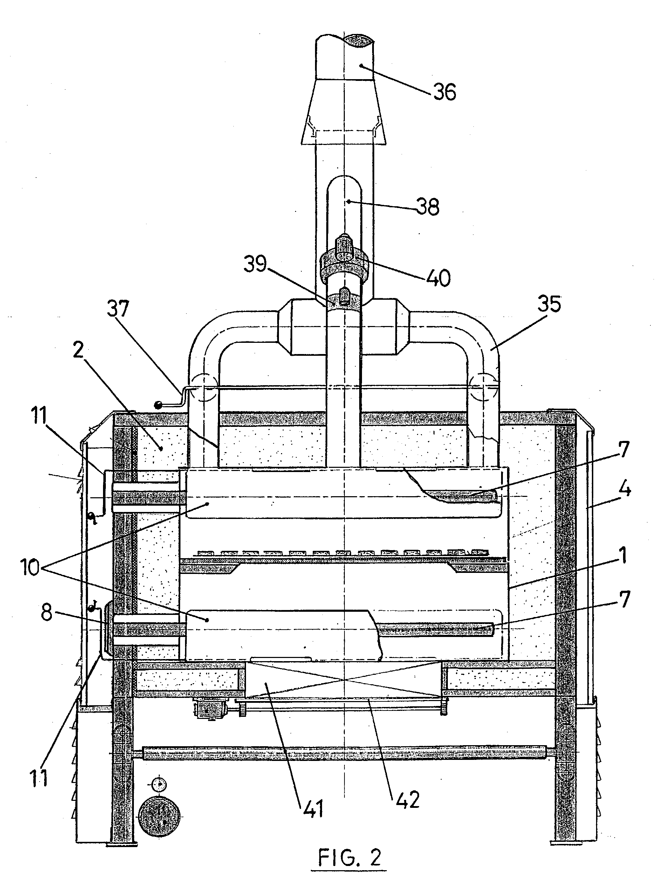

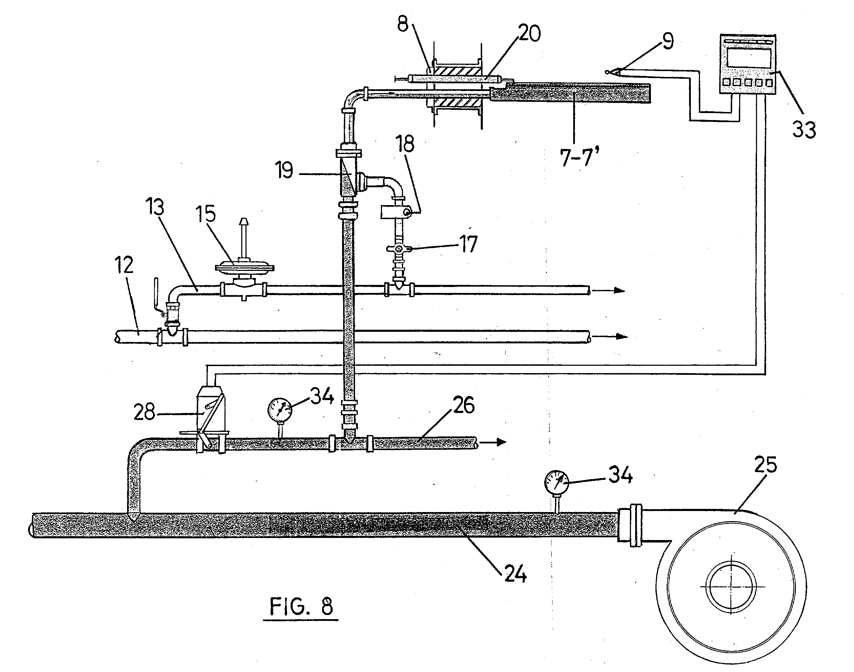

The assembly of the bodies 7-7' of each burner is shown in Figures 2 and 8, with plate 8 arranged on the outside of the wall of the oven, and by means of its assembly the burner and the electrode 20 may be extracted. Temperature probe 9 feeding the temperature control by means of automaton 33 is also shown in Figure 8. The air circuit includes pressure gauges 34 for air pressure control both in the general pipe and in the branch pipes. Otherwise, the scheme of Figure 8 includes elements already described and referred to above.

As can be appreciated in Figures 1 to 3, the oven has at preset distances in the top wall two openings every six modules from which depart as many stacks 35 converging in a main exhaust general stack 36 through which the combustion gasses are discharged to the outside by natural draft and with the slight overpressure existing in the combustion chamber. Stacks 35 carry hand-operated flaps 37 for regulation of the exit flow rate of the gasses but without them being capable of closing by more than half the passage thereof. Furthermore, there is an auxiliary exhaust conduit 38 also connecting with the general stack 36 through a sloping section which is equipped with an electrically operated, motorized shutoff 39 and a forced draft extractor 40. This auxiliary conduit 38 is suitable for increasing the exit flow rate of air through the chamber to the stacks in certain situations, e.g. during pre-purging, so as to shorten the necessary time therefore; when shutting down the oven in order to shorten the cooling time and moderate the thermal upturn after the same; in the case of activating the safety thermostat when the set temperature is exceeded in any of the areas; in case of selecting a set temperature lower than the temperature existing in the chamber by a predetermined magnitude, so as to reduce the required time for reaching the new temperature, etc.

A rectangular opening 41, centered with regard to the adjacent stacks, the purpose of which is to facilitate the entry of air from the outside environment in certain situations, is arranged in the base of combustion chamber, also at preset distances. These openings are generally closed by gate 42 with an on/off mechanism for opening and closing. When any of the circumstances listed above takes place, the opening of said gate occurs automatically by means of the actuation of a motor provided therefore.

Identification of any of the situations discussed will cause the motorized shutoff 39 to open and the forced draft extractor 40 to start-up, located in auxiliary exhaust conduit 38. Simultaneously, aperture of the slidable gate 42 of the rectangular opening in the base of the chamber will also occur. Under these conditions, the exhaust flow rate is increased, which will occur with a slight depression in the chamber.

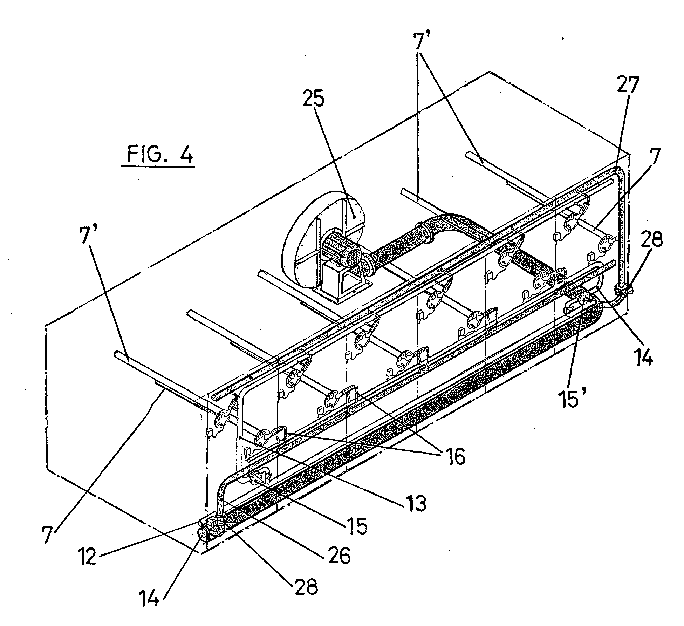

The air flow rate provided for combustion, and thus the heat input of the burners in each area, are modified according to the regulation target parameter, which is the temperature. As already indicated, temperature variations in an area result in electric signals, which actuate on servomotor 28, Figure 4, so as to increase or reduce the flow rate of combustion air to the burners 8 in the corresponding area. Continuous operation of the burners, which constantly modulate their heat power according to variations of air flow rate, which for their part are due to temperature variations in the chamber, is thus obtained.

As already indicated, each area of the oven may include a different number of burners to the one shown in the drawings, each area having top or ceiling burners and bottom or floor burners.

## Claims

1. A baking oven for pastry products, comprising a modular tunnel of rectangular cross-section along which runs a conveyor chain or belt for the products to be baked, above and below which gas burners are arranged, the tunnel having openings for exhausting combustion and baking products on the ceiling and openings for the entry of air on the floor, **characterized in that** the burners are grouped by areas having independent regulating means, each burner being constituted by a tubular body perpendicularly laying across the tunnel and having a series of orientable, calibrated holes for flame forming along the entire length, all of the chambers being connected, each one through a mixer, to a gas supply circuit and an air supply circuit; which gas supply circuit includes a general pipe that runs the entire oven and from which two branch pipes depart in each area, one for supplying the top or ceiling burners and another one for supplying the bottom or floor burners, each one of them provided with a pressure regulator and inlets coming out on the mixers of the burners and having a shut-off valve; and which air supply circuit comprises a general pipe that runs the entire oven and is fed with compressed air supplied by a blower, and from which two branch pipes depart in each area, one for supplying the top burners and the other one for supplying the bottom burners, each one of them provided with an automatic flow rate regulator, acting according to the temperature in the corresponding area of the combustion chamber, and inlets that come out on the mixers; and **in that** near each burner and parallel thereto runs a radiant and orientable deflector emitting radiant heat towards the product to be baked.

2. An oven according to claim 1, **characterized in that** each one of the modules forming the tunnel carries two burners, a top one and a bottom one, not facing each other vertically, and two orientable deflectors, each one near and parallel to a burner.

3. An oven according to claims 1 and 2, **characterized in that** the aforementioned deflectors consist of heat-resisting steel plates, of approximately rectangular outline, which are tiltably mounted on a shaft which is parallel to the chamber of the burners and coincident with or close to one of the longitudinal edges of the plate; which shaft projects outwards the tunnel and has an actuation lever connected thereto for its orientation.

4. An oven according to claim 1, **characterized in that** the openings in the ceiling are arranged in groups of three, two of them transversally aligned and the third one located in a centered position and longitudinally shifted with regard to the former; respective conduits, which are provided with a hand-operated passage gate, depart from the former two and converge on a main exhaust pipe, whereas an auxiliary exhaust conduit departs from the third part, coming out on the main exhaust conduit and having a forced draft extractor and a motorized shutoff mounted thereon.

5. An oven according to claim 1, **characterized in that** the floor opening has a motor-operated sliding gate with on/off closing and opening mounted thereon.
